# EUROPÄISCHE PATENTSCHRIFT

(11) **EP 0 447 573 B1**
(45) Veröffentlichungstag und Bekanntmachung des Hinweises auf die Patenterteilung: **02.08.1995**
(21) Anmeldenummer: 90105053.4
(22) Anmeldetag: 17.03.1990
(51) Int. Cl.: B29C 45/30, B29C 45/28

(54) **Heisskanaldüse**
Hot runner nozzle
Buse pour canal chaud

(43) Veröffentlichungstag der Anmeldung: 25.09.1991
(73) Patentinhaber: Dipl.-Ing. Herbert Günther Gesellschaft mbH, A-2380 Perchtoldsdorf (AT)
(72) Erfinder: Günther, Herbert, Dipl.-Ing., W-3559 Allendorf/Eder (DE)
(74) Vertreter: Olbricht, Karl Heinrich, Dipl.-Phys.

(56) Entgegenhaltungen:
- EP-A- 0 186 413
- FR-A- 2 591 936
- US-A- 4 304 544
- KUNSTSTOFFE, Band 70, Nr. 11, November 1980, Seiten 730-737, München, DE; P. UNGER: "Heisskanalsystem mit indirekt beheiztem Wärmeleittorpedo"
- PATENT ABSTRACTS OF JAPAN, Band 10, Nr. 59 (M-459)[2116], 8. März 1986 & JP-A-60 206 613 ( SHIGERU TSUTSUMI) 18.10.1985

## Beschreibung

Die vorliegende Erfindung betrifft eine Heißkanaldüse gemäß dem Oberbegriff von Anspruch 1.

Heißkanal-Anordnungen mit mehreren Radialkanälen an zungenförmigen Düsenspitzen, um eine Schmelze gleichzeitig über mehrere Einspritzöffnungen in einen Formhohlraum oder in eine Anzahl von Formnestern einzubringen, sind aus DE-A-3 417 220 ersichtlich. Nachteilig sind dabei große Wärmeverluste, die durch das Anliegen der heißen Spitzen an bzw. in der gekühlten Formplatte hervorgerufen werden.

Beispielsweise gemäß DE-A-3 208 339 hat man deshalb schlecht wärmeleitende oder isolierende Dichtungen am Materialübertritt der Düse vorgesehen. Allerdings ist zum seitlichen Anspritzen stets eine Wandung erforderlich, an der am Schluß eines Arbeitstaktes Material erstarrt. Infolgedessen muß beim nächsten Zyklus ein kalter Pfropfen in den zu fertigenden Artikel hineingepreßt werden, was nicht nur eine größere Dicke des Artikels voraussetzt, sondern auch zu Oberflächenfehlern und mangelnder Festigkeit führt.

Beim Spritzguß sind allgemein enge Temperaturbereiche notwendig, da sonst eine Fadenbildung oder ein Einfrieren des Angusses auftritt. Bei zu niedriger Massetemperatur entsteht ein zu langer kalter Anguß. Dann hat man Probleme etwa beim Aufdrucken eines Verfalldatums, z. B. auf einem Becherboden, oder es entstehen Unebenheiten, so daß sich beispielsweise ein Becher nicht mehr gut stellen läßt. Der Angußbereich am Produkt ist extrem bruchanfällig und ein häufiger Reklamationsgrund.

Zur Abhilfe sieht EP-A-0 186 413 ein Heißkanalsystem der eingangs genannten Art vor, wobei der Düsenkörper unten schräg abwärts gerichtete Spitzen aufweist, die von einem im Inneren des Düsenkörpers angeordneten elektrischen Heizstab wärmeleitend unmittelbar erwärmt werden. Schmelzen, die je einen äußeren und einen inneren Kanal parallel durchströmen, sollen dadurch bis zur Vermischung am Austritt, nämlich an seitlichen Einspritzöffnungen des Formnests, fließfähig gehalten werden. In einer hinterschnitten ausgebildeten Formbuchse, die den Düsenkörper mit radialem Abstand umgibt, sind die im wesentlichen zylindrischen Leitspitzen an dessen unterem Ende so befestigt, daß durch ein kleines Loch von unten ein gewünschter radialer Überstand eingestellt werden kann. Das kann jedoch nur von einem Werkzeugmacher und nur beim Einbau durchgeführt werden; nachdem Material eingespritzt wurde, sind Ausbau und Wartung nahezu unmöglich.

Ziel der Erfindung ist es, die Nachteile des Standes der Technik mit einfachen Mitteln zu überwinden und eine Vorrichtung der genannten Art so weiterzuentwickeln, daß eine Mehrfachanspritzung auf wirtschaftliche Weise durchführbar ist, und zwar auch bei größeren Angußpunkten, mit guter Montagemöglichkeit und unabhängig vom Typ eines später einzusetzenden Heißkanalsystems.

Hauptmerkmale der Erfindung sind Gegenstand von Anspruch 1. Ausgestaltungen sind in den Ansprüchen 2 bis 8 angegeben.

Bei einer Heißkanaldüse mit einem an einer Formnestplatte befestigbaren Anschlußkopf, an dem ein von einem beheizbaren Hauptkanal für die zu verarbeitende Kunststoffmasse durchsetzter, bedarfsweise mit Verschlußnadeln im Hauptkanal und/oder in zu der Formnestplatte führenden Seitenkanälen versehener Düsenkörper angeordnet ist, der an oder nahe seinem unteren Ende gut wärmeleitende Leitspitzen aufweist, die an einer gut wärmeleitenden Halterung angebracht und in bezug auf das Formnest verschieb- sowie arretierbar sind, sieht die Erfindung gemäß Anspruch 1 vor, daß die Halterung mit einem festsetz- und lösbaren Klemmring für die Leitspitzen versehen ist, der über einen Abstandsring oder -korb mit schlecht wärmeleitenden Stegen an einem Träger befestigt ist. Dadurch ist eine gute Isolierung zum Gehäuse hin gegeben, so daß die Wärmeverluste entsprechend gering sind. Man kann die zunächst am Werkzeug befestigte Halterung später in den Düsenkörper einbauen. Das ist sehr vorteilhaft für die Wartung und Instandhaltung; eventuelle Reparaturen an den aktiven Elementen, z.B. an der Heizeinrichtung der Heißkanaldüse, erfordern daher einen stark verminderten Arbeitsaufwand. Die Leitspitzen sind zur Montage bzw. Demontage entnehmbar oder in das Halterungs-Innere einziehbar. Die gute Wärmeleitung der Halterung sorgt für maximale Wärmeübertragung von der Heißkanaldüse in das Formnest und trägt damit ebenso zur Schnelligkeit wie zur Qualität der energetisch sehr wirtschaftlichen Fertigung bei. Die Wandstärken zum Nest hin können außerdem erheblich dicker, stabiler und gleichmäßiger gestaltet werden, als dies bislang bei seitlicher Anspritzung möglich war.

Durch die Ausbildung von Anspruch 2, wonach der Düsenkörper in bezug auf eine Achse im wesentlichen rotationssymmetrisch ausgebildet ist und die Halterung eine zylindrischen Ansatz des Düsenkörpers konzentrisch umschließt, erzielt man einen besonders einfachen Aufbau.

Indem der Klemmring gemäß Anspruch 3 mittels wenigstens einer Druckschraube festsetzbar ist, vollzieht sich die Einstellung rasch und präzise, zumal sich am Klemmring und/oder an den Leitspitzen geeignete Rastmittel anordnen lassen. Auch kann nach Anspruch 4 an der Halterung als Zentriermittel eine Ausnehmung vorhanden sein, in die ein zugeordneter Leitspitzen-Bund ragt. Für Montage und Wartung ist es ferner günstig, wenn gemäß Anspruch 5 die in der Halterung sitzenden Leitspitzen durch Einschieben des Düsenkörpers lagefixierbar sind, insbesondere durch Formschluß des Ansatzes mit einem rückseitigen Anschlag der Leitspitzen. Diese können im Einklang mit Anspruch 6 im wesentlichen zylindrisch sein und ein konisches Ende haben, dessen Öffnungswinkel kleiner ist als derjenige eines kalottenförmigen Eintrittskegels, in dem die ausgeschobene Leitspitze bis unmittelbar an das Formnest heranreicht. Man erzielt auf diese Weise eine genaue und zuverlässige Zentrierung.

Für die Montage ist es außerordentlich zweckmäßig, wenn die Formnestplatte gemäß Anspruch 7 zur Aufnahme des Trägers eine Bohrung hat, die unten durch einen Boden abschließbar ist, so daß ein bequemer Zugang geöffnet und geschlossen werden kann. Mithin läßt sich die Halterung in die Formnestplatte von einer Bohrung her, insbesondere wahlweise von der einen wie von der anderen Richtung (oben oder unten) her ein- bzw. ausbauen. Dabei ist es vorteilhaft, wenn laut Anspruch 8 der Anschlußkopf an einer Schulter der Bohrung zur Anlage kommt, wodurch eine exakte Positionierung gewährleistet ist.

Alle diese Maßnahmen erlauben es, jede beliebige Anspritzart auf einfache Weise durchzuführen. Die Voraussetzungen für ein mehrfaches seitliches Anspritzen lassen sich im Spritzgieß-Werkzeug unabhängig von einem später einzusetzenden Heißkanalsystem schaffen. Außerdem ist ein Austausch der eigentlichen Heißkanaldüse möglich, ohne daß die Halterung mit den Leitspitzen zuvor aus dem Werkzeug demontiert werden müßte. Zu schneller Schußfolge und einwandfreier Qualität trägt es ferner bei, daß die Abdichtung durch den an den kalten Wandungen erstarrten Kunststoff erfolgt.

Weitere Merkmale, Einzelheiten und Vorteile der Erfindung ergeben sich aus dem Wortlaut der Ansprüche sowie aus der folgenden Beschreibung eines Ausführungsbeispiels anhand der Zeichnung. Darin zeigen:
- Fig. 1: eine Teil-Axialschnittstelle einer in eine Formnestplatte eingebauten Heißkanaldüse, und
- Fig. 2: eine Druntersicht, teilweise im Schnitt entsprechend der Linie II-II von Fig. 1, eines demgegenüber um 90° versetzten Düsenkörpers.

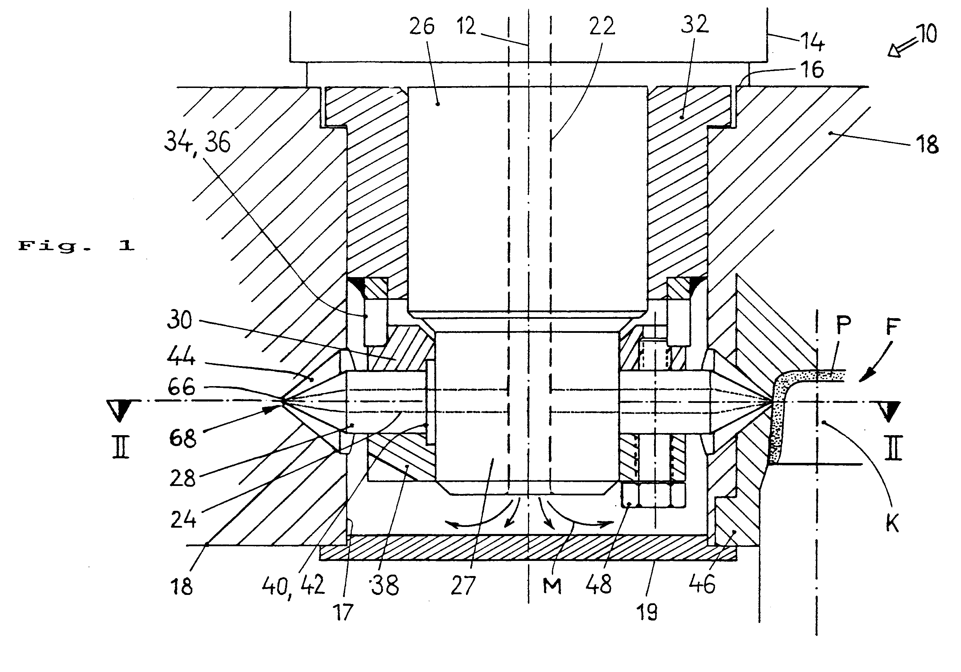

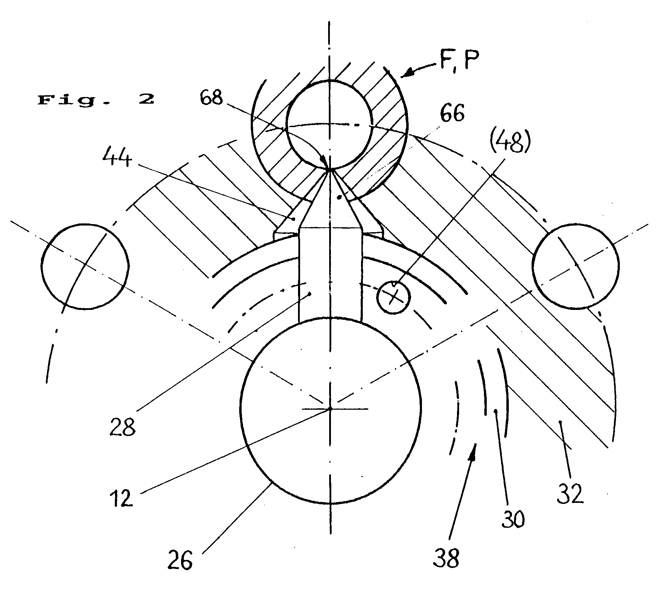

Die in Fig. 1 und 2 dargestellte Ausführungsform einer erfindungsgemäßen Heißkanaldüse ist allgemein mit 10 bezeichnet. Sie hat einen Anschlußkopf 14, der in eine Bohrung 17 einer Formnestplatte 18 eingesetzt ist und an dieser mit einer Schulter 16 zur Anlage kommt, ferner einen Düsenkörper 26, der zu einer Achse 12 im wesentlichen rotationssymmetrisch und in einem hier als Buchse ausgebildeten Träger 32 gehalten ist. Ein zentral verlaufender Hauptkanal 22 durchsetzt den Düsenkörper 26 bis zum unteren Ende eines Ansatzes 27 hin.

Eine Halterung 30 umgibt den Ansatz 27 konzentrisch. Sie ist an dem Träger 32 mittels eines schlecht wärmeleitenden Abstandsringes oder -korbes 34 befestigt, der in Umfangsabständen angeordnete Stege 36 aufweist.

In der Halterung 30 sind Leitspitzen 28 durch einen Klemmring 38 gehalten, der z. B. mittels wenigstens einer Druckschraube 48 an der Halterung 30 festsetzbar ist und dabei die Leitspitzen 28 in der eingestellten Radialposition festklemmt. Um die Zentrierung zu unterstützen, kann eine Ausnehmung 40 in den Halteelementen 30, 38 mit einem Bund 42 an den Leitspitzen 28 als Anschlag zusammenwirken.

Die konischen Enden 66 der Leitspitzen 28, deren Hauptteil zylindrische Gestalt hat, münden in einem Formnesteinsatz 46 in Aussparungen, die als kalottenförmige Eintrittskegel 44 mit einem Öffnungswinkel ausgebildet sind, der jenen der Leitspitzen 28 deutlich überschreitet. Letztere reichen bis unmittelbar an das Angußende der Eintrittskegel 44 heran, an die das Formnest F anschließt. Die Bohrung 17 der Formnestplatte 18 ist unten durch einen Boden 19 abgeschlossen. Das zu verarbeitende Material strömt in Pfeilrichtung M aus dem Hauptkanal 22 aus; es wird von dem Boden 19 zu den Eintrittskegeln 44 umgelenkt, wo die Leitspitzen 28 eine zusätzliche Erwärmung bewirken. Daher gelangt das gut fließfähige Material durch einen Ringspalt 68 in das Formnest F, das einen geeigneten Formkern K enthält.

Es ist auch möglich und erfindungsgemäß vorgesehen, daß im Ansatz 27 des Düsenkörpers 26 von dem Hauptkanal 22 Seitenkanäle 24 abzweigen, wie in Fig. 1 gepunktet angedeutet. Sie reichen bis an die Enden der Leitspitzen 28, die jeweils einen Konus 66 bilden. Ist er zurückgezogen, so kann zu verarbeitendes Material durch den Ringspalt 68 austreten. Es fließt beim Spritzvorgang durch die Seitenkanäle 24 in die Eintrittskegel 44 und damit in das Formnest F. Die Anordnung eignet sich sowohl zum Einfachspritzen als auch zur Mehrfachanspritzung, und zwar insbesondere auch für Artikel, die wandseitig im Formnest größere Dicke aufweisen. Da die Leitspitzen 28 eine wählbare Neigung zur Achse 12 haben können, sind beliebige Anspritzarten möglich.

Die Erfindung ist nicht auf die dargestellten Ausführungsformen beschränkt. Man erkennt aber, daß bei einer bevorzugten Ausführungsform an einem Anschlußkopf 14 einer Heißkanaldüse 10 zu einer Formnestplatte 18 ein von einem beheizbaren Hauptkanal 22 durchsetzter Düsenkörper 26 sitzt, der an seinem unteren Ende 27 gut wärmeleitende, in bezug auf das Formnest F verschiebbare und arretierbare Leitspitzen 28 aufweist. Diese sind an einer wärmeleitenden Halterung 30 entnehmbar oder in ihr Inneres einziehbar angeordnet, die an einem zylindrischen Ansatz 27 des Düsenkörper 26 oder vor dessen Einbau an der Formnestplatte 18 anbringbar ist. Die mit einem Konus 66 auslaufenden Leitspitzen 28 stehen quer oder geneigt zur Achse 12 des Düsenkörpers 26. Sie geben bei zurückgezogener Stellung im Hauptkanal 22 und/oder in Seitenkanälen 24 einen Einspritz-Ringspalt 68 frei, der durch Vorschieben des betreffenden Konus 66 teilweise oder ganz verschließbar ist.

## Patentansprüche

1. Heißkanaldüse (10) für Spritzgieß-Vorrichtungen, mit einem Anschlußkopf (14), welcher an einer Formnestplatte (18) befestigbar ist und an welchem ein von einem beheizbaren Hauptkanal (22) für die zu verarbeitende Kunststoffmasse durchsetzter Düsenkörper (26) angeordnet ist, der bedarfsweise mit Verschlußnadeln im Hauptkanal und/oder in zu einer Formnestplatte (18) führenden Seitenkanälen versehen ist, wobei der Düsenkörper (26) an oder nahe seinem unteren Ende (27) gut wärmeleitende Leitspitzen (28) aufweist, die an einer gut wärmeleitenden Halterung (30) angebracht und in bezug auf das Formnest (F) verschieb- sowie arretierbar sind, dadurch **gekennzeichnet**, daß die Halterung (30) mit einem festsetz- und lösbaren Klemmring (38) für die Leitspitzen (28) versehen ist, der über einen Abstandsring oder -korb (34) mit schlecht wärmeleitenden Stegen (36) an einem Träger (32) befestigt ist.

2. Heißkanaldüse nach Anspruch 1, dadurch **gekennzeichnet**, daß der Düsenkörper (26) in bezug auf eine Achse (12) im wesentlichen rotationssymmetrisch ausgebildet ist und daß die Halterung (30) einen zylindrischen Ansatz (27) des Düsenkörpers (26) konzentrisch umschließt.

3. Heißkanaldüse nach Anspruch 1 oder 2, dadurch **gekennzeichnet**, daß der Klemmring (38) mittels wenigstens einer Druckschraube (48) festsetzbar ist.

4. Heißkanaldüse nach einem der Ansprüche 1 bis 3, dadurch **gekennzeichnet**, daß an der Halterung (30) als Zentriermittel eine Ausnehmung (40) vorhanden ist, in die ein zugeordneter Leitspitzen-Bund (42) ragt.

5. Heißkanaldüse nach einem der Ansprüche 1 bis 4, dadurch **gekennzeichnet**, daß die in der Halterung (30, 38) sitzenden Leitspitzen (28) durch Einschieben des Düsenkörpers (26) lagefixierbar sind, insbesondere durch Formschluß des Ansatzes (27) mit einem rückseitigen Anschlag (42) der Leitspitzen (28).

6. Heißkanaldüse nach einem der Ansprüche 1 bis 5, dadurch **gekennzeichnet**, daß jede Leitspitze (28) einen Hauptteil von zylindrischer Gestalt und ein konisches Ende hat, dessen Öffnungswinkel kleiner ist als derjenige eines kalottenförmigen Eintrittskegels (44), in dem die ausgeschobene Leitspitze (28) bis unmittelbar an das Formnest (F) heranreicht.

7. Heißkanaldüse nach einem der Ansprüche 1 bis 6, dadurch **gekennzeichnet**, daß die Formnestplatte (18) zur Aufnahme des Trägers (32) eine Bohrung (17) hat, die unten durch einen Boden (19) abschließbar ist.

8. Heißkanaldüse nach Anspruch 7, dadurch **gekennzeichnet**, daß der Anschlußkopf (14) an einer Schulter (16) der Bohrung (17) zur Anlage kommt.

## Claims

1. Hot runner nozzle (10) for injection moulding apparatus including a connecting block (14) adapted to be attached to a cavity plate (18) and provided with a nozzle body (26) through which a heatable main runner (22) for the plastic mass to be processed extends, if required with plug needles in the main runner and/or in side runners (24) leading to the cavity plate (18), the nozzle body (26) comprising at or near its lower end (27) conducting points (28) of good heat conduction which are fixed to a mount (30) of good heat conduction and are slideable and fixable relative to the mould cavity (F), wherein the mount (30) comprises an attachable and detachable clamping ring (38) for the conducting points (28), said clamping ring (38) being fixed to a support (32) by means of a distance ring or basket (34) having fingers (36) of poor heat conduction.

2. Hot runner nozzle according to claim 1, wherein the nozzle body (26) is substantially rotation-symmetrical relative to an axis (12) and wherein the mount (30) concentrically encloses a cylindrical stud (27) of the nozzle body (26).

3. Hot runner nozzle according to claim 1 or claim 2, wherein the clamping ring (38) is fixable by means of at least one pressing screw (48).

4. Hot runner nozzle according to any one of claims 1 to 3, wherein as a centering means, the mount (30) includes a recess (40) into which an associated shoulder (42) of the conducting points (28) extends.

5. Hot runner nozzle according to any one of claims 1 to 4, wherein the conducting points (28) seated in the mount (30, 38) are adapted to be fixed in their position by slidingly inserting the nozzle body (26), particularly through form-fit of the stud (27) with a rear stop (42) of the conducting points (28).

6. Hot runner nozzle according to any one of claims 1 to 5, wherein each conducting point (28) comprises a main portion of cylindrical shape and a conical end portion having an included angle which is smaller than that of a calotte-shaped entrance cone (48) in which the respective extended conducting point (28) reaches directly to the mould cavity (F).

7. Hot runner nozzle according to any one of claims 1 to 6, wherein for receiving the support (32), the cavity plate (18) comprises a bore (17) adapted to be closed below by a bottom plate (19).

8. Hot runner nozzle according to claim 7, wherein a shoulder (16) of the bore (17) engages the connecting block (14).

## Revendications

1. Buse pour canal chaud (10) pour dispositifs d'injection, avec une tête de raccordement (14) qui est fixable à une plaque d'empreinte du moule (18) et sur laquelle est situé un corps de buse (26) traversé par un canal principal (22) chauffable pour la masse de matière plastique à injecter, ce corps de buse étant pourvu, selon les besoins, d'aiguilles d'obturation dans le canal principal et / ou dans des canaux latéraux conduisant à la plaque d'empreinte du moule (18), le corps de buse (26) possédant à ou près de son extrêmité inférieure (27) des pointes de conduite (28) conduisant bien la chaleur, situées sur une fixation (30) conduisant également bien la chaleur, et coulissables et blocables par rapport à l'empreinte du moule (F), CARACTERISEE EN CE QUE la fixation (30) est pourvue d'un anneau de blocage (38) serrable et desserrable pour les pointes de conduite (28), lequel est fixé à un support (32) moyennant une bague ou panier d'écartement (34) avec des traverses mauvaises conductrices de la chaleur.

2. Buse pour canal chaud selon la revendication 1, CARACTERISEE EN CE QUE le corps de buse (26) a substantiellement une forme à symétrie de révolution par rapport à un axe (12), et que la fixation (30) encercle concentriquement une embase cylindrique (27) du corps de buse (26).

3. Buse pour canal chaud selon la revendication 1 ou 2, CARACTERISEE EN CE QUE l'anneau de blocage (38) est fixable par au moins une vis de serrage (48).

4. Buse pour canal chaud selon l'une des revendications de 1 à 3, CARACTERISEE EN CE QU'un évidement (40) se trouve sur la fixation (30), en tant qu'élément de centrage, dans lequel va un collet correspondant (42) de la pointe de conduite.

5. Buse pour canal chaud selon l'une des revendications de 1 à 4, CARACTERISEE EN CE QUE les pointes de conduite (28) logées dans la fixation (30, 38) peuvent être fixées dans leur position en poussant le corps de buse (26), notamment grâce à la solidarité de forme de l'embase (27) avec une butée dorsale (42) des pointes de conduite (28).

6. Buse pour canal chaud selon l'une des revendications 1 à 5, CARACTERISEE EN CE QUE chaque pointe de conduite (28) a une partie principale de forme cylindrique et une extrêmité conique, dont l'angle d'ouverture est plus petit que celui d'un cône d'entrée en forme de calotte (44), dans lequel la pointe de conduite avancée (28) atteint directement l'empreinte du moule (F).

7. Buse pour canal chaud selon l'une des revendications 1 à 6, CARACTERISEE EN CE QUE la plaque d'empreinte du moule (18) a une perforation (17) pour recevoir le support (32), cette perforation étant refermable en bas par un fond (19).

8. Buse pour canal chaud selon la revendication 7, CARACTERISEE EN CE QUE la tête de raccordement (14) vient se poser sur un épaulement (16) de la perforation (17).
